# EUROPEAN PATENT SPECIFICATION

(11) **EP 4 172 522 B1**
(45) Date of publication and mention of the grant of the patent: **25.12.2024**
(21) Application number: 21735783.9
(22) Date of filing: 24.06.2021
(51) Int. Cl.: F16L 9/147, E21B 17/20, E21B 17/04

(54) **SYSTEM FOR TRANSPORTING A FLUID, AND METHODS OF USING THE SAME**
SYSTEM ZUM TRANSPORT EINER FLÜSSIGKEIT UND VERFAHREN ZUR VERWENDUNG DAVON
SYSTÈME POUR LE TRANSPORT D'UN FLUIDE ET SES PROCÉDÉS D'UTILISATION

(30) Priority: 26.06.2020 NL 2025930
(43) Date of publication of application: 03.05.2023
(60) Divisional application: 24213395.7
(73) Proprietor: Stichting Administratiekantoor CRA, 1325 PC Almere (NL)
(72) Inventor: BURNABY LAUTIER, Emile, 1325 PC ALMERE (NL); MAATJES, Geert Reinder, 4431 CL 'S GRAVENPOLDER (NL)
(74) Representative: Hoyng Rokh Monegier B.V.
(86) International application number: PCT/NL2021/050399
(87) International publication number: WO 2021/262003

(56) References cited:
- WO-A1-2018/094519
- US-A- 3 537 484
- US-A- 5 921 285
- US-A1- 2008 066 961

## Description

### FIELD OF THE INVENTION

The invention relates generally to a system for transporting a fluid, for downhole applications, the system comprising a tubing hanger and a tubing connected to a production packer and/or a downhole anchor and more particularly to a production or injection installation and a method of placing production and/or injection tubing in a subsurface well.

### BACKGROUND OF THE INVENTION

There is a general and ongoing need to improve subsurface fluid retrieval from subsurface reservoirs. Wells are generally deep and have highly hostile environments. Known production tubing, the tubing through which the subsurface fluid is moved, is generally metallic. Metallic production tubulars have been used for oil/gas production since the inception but are particularly prone to corrosion. The subsurface environment is often highly corrosive. Corrosion is the largest asset value eroding item in subsurface fluid retrieval. As a result of corrosion, expensive intervention repairs are required during the life of a well. As a result, the operator of a well is faced with many health, safety, and environment hazards, and extremely high repair costs per well. Workovers, which are required to deal with the highly corrosive nature of the subsurface environment, when traditional tubing is used, are a maj or source of pollution and result in increased operational risks.

Due to the use of traditional tubing, well operators are often faced with the requirement of costly workovers every two to seven years. As such, over a 20 year lifecycle of conventional tubing, the well operator is faced with significant expenses related to maintenance and installation.

A problem with known tubing in a subsurface well that it must be composed of many separate parts, often of equal length. In fact, with conventional tubing, hundreds of sections of tubing may be deployed in the well, which must all be connected to one another. This results in the use of a high plurality of connections between the separate parts of the tubing. Since so many connections are required, the material choices and intricacies of the manufacturing process are severely restricted.

Since the known tubing is made from many different sections, the time required to install the tubing in a well is very great. As a result, associated costs are very high. A further important problem with known tubulars is that the corrosion lead to a limited life, when compared to the total well life. If the life of the tubing is lower than the well life, the well operator will be faced with the choice of additional investments when the well is not at the end of its life. As a result, the well operator may decide to terminate all subsurface production, leading to a permanent loss of oil or gas. The short service life of the known tubing thus may induce a higher total permanent oil/gas loss.

Various attempts have been made to address this desire for improved subsurface fluid retrieval and/or injection of disposed produced water or reservoir pressure maintenance injection. To counteract the negative effects of corrosion in the known tubing, expensive water transport systems, water treatment plant and/or costly corrosion inhibitors have been utilized. These solutions did not prove to be effective against the problems described above. Alternatively, highly expensive materials are used in an attempt to counteract the negative influences of corrosion. These materials are generally very expensive to use as production tubing and do not provide adequate resistance against corrosion.

Tubing applications which are not aimed at subsurface fluid retrieval have adopted composite tubulars, such as risers, jumpers and onshore flowlines. However, these known tubing applications have not been provided in downhole completions due to the inhospitable conditions, such as extreme pressures, high temperatures, and high axial tensile loads, and corrosive environments. Also, the known tubing, used for other applications than downhole applications, are known to have very large coupling members and do not adhere to industry standards such as API 5CT dimensions. These coupling members have dimensions so large that they cannot readily be provided in a standard well casing design, even if the abovementioned problems would be overcome.

US 2008/0066961 discloses a prior art system for transporting fluid.

There thus is a need for improved apparatuses and methods for subsurface fluid retrieval.

### BRIEF SUMMARY OF THE INVENTION

In one aspect of the invention there is provided tubing for transporting a fluid, the tubing comprising; an inner liner; and an outer wall, wherein the tubing is connected to a production packer and/or a downhole anchor. In an embodiment, the inner liner and the outer wall are in direct contact with one another. In another embodiment, the inner liner is indirectly adhered to the inner surface of the outer wall.

In an embodiment of the present disclosure, the tubing can be spooled. This ensures that the tubing is not composed of a high plurality of separate parts, all coupled together by coupling members. Further, in an embodiment, the tubing of the present disclosure is a permanent installation in a well. The tubing of the present disclosure is intended for subsurface fluid production and/or injection, and is not temporary tubing intended for workover and/or intervention procedures. In an embodiment, the tubing may also be utilized also for e.g. other operational options, such as fracking, acidizing, nitrogen lift, etc. The tubing is not necessarily limited to a single operational option.

The tubing of the present invention is primarily directed at the production of oil and/or gas from an oil/gas well, as well as used for the injection of water. The injection of water can be for reservoir pressure maintenance purposes or for the disposal of (produced) water. Hereinafter, reference is made to production tubing, as a general annotation of the claimed tubing. Production tubing is understood to encompass all tubing directed at the retrieval of subsurface fluids such as oil and/or gas and/or water via production tubing and/or injection tubing for the injection of a fluid into a well. Production tubing relates to the tubing used for moving a fluid from a well to the surface. Injection tubing relates to the tubing for moving a fluid from the surface into the well. These are both hereinafter referred to as production tubing. It shall be appreciated that the claimed tubing operates subsurface, in a well. The tubing of the present disclosure is used preferably for the production of oil and/or gas. Alternatively, or additionally, the tubing is used for the injection of water into a geothermal layer and the production of heated water under pressure from that layer.

The term 'connected' in the present invention is understood to comprise known coupling assemblies, as well as the coupling assembly described in the present disclosure. It does not entail a direct connection. Intermediate components may be present. In an embodiment, the tubing is connected directly with a thread connection to the top of the packer and/or downhole anchor In another embodiment, the tubing comprises a coupling member, which may be connected to the production packer and/or the downhole anchor. The tubing may also be connected using a removable seal feature. Such seal feature can be anchored in the packer, with an anchor latch, or can be floating, with a locator seal. These are both referred to as a downhole anchor. These components compensate for expansion and/or contraction to a production packer and/or tubing anchor. A downhole anchor is used specifically when the production packer is already positioned in the well or in case of large thermal movement or forces. Since rotating the tubing to screw it to the production packer is not preferred, the anchor is provided to ensure a connection between the production packer and the production tubing. The tubing is run into the well, already coupled to the anchor. The connection between the tubing to the anchor may be provided by a coupling member as described hereinafter. The anchor latches onto the production packer downhole. The production tubing of the present invention may be connected to an anchor or to a production packer, prior to being positioned in the well. In both cases, the tubing is ultimately positioned downhole for the purpose of subsurface fluid production. In both cases, after being positioned downhole, the production tubing is connected to the production packer, either directly or indirectly.

Between the production tubing and the production packer and/or the downhole anchor, a coupling member may be in place. In one embodiment, the coupling mechanism may comprise a coupling member which is arranged to bind to fibers of the tubing, preferably fibers of the outer wall of the tubing, to form an integral connection between the fibers and the coupling member. Binding the fibers of the outer wall of the tubing to the coupling member may be done by winding the fibers around the coupling member. Binding may also be done by way of adhesion, wrapping, or the like. In particular, the fibers may extend over the coupling member, thereby joining the outer wall to the coupling member to form the tubing of the present disclosure. Other and/or additional coupling arrangements may be provided between the production tubing and the production packer and/or the downhole anchor. For example, a pub joint may be utilized, which is connected to the tubing via a coupling member, and to which the production packer is connected, in turn. In particular, known coupling mechanisms such as threaded coupling arrangements may be utilized.

In an embodiment, the tubing is suspended between a tubing hanger at the surface of the well and a production packer and/or an downhole anchor. The tubing hanger is the component positioned on top of a wellhead and serves as the main support for the production tubing. The wellhead is the component at the surface of a well that provides the structural and pressure-containing interface for the drilling and production equipment.

A packer is a standard component of the completion hardware of oil, gas and/or injection wells used to provide a seal between the outside of the production tubing and the inside of the casing, liner, or wellbore wall. Based on their primary use, packers can be divided into two main categories: production packers and service packers. Production packers are those that remain in the well during well production, e.g. pumping a fluid to or from the well. Service packers are used temporarily during well service activities such as cement squeezing, acidizing, fracturing and well testing. Hereinafter, when the term packer and/or production packer is used, reference is made to production packers. The purpose of a production packer is to provide a seal between a completion string and a casing, so that the well is divided into two separate regions. The completion string refers to all components from the bottom of the production tubing upwards. The casing is the outer wall/outer liner in a well, through which the production tubing is guided into the well. The production tubing is installed in the casing. The production packer prevents communication between the formation, which is the region from which the production takes place, to the production annulus above the production packer. The production annulus is the region between the production tubing and the casing, above the production packer. Further, the production packer prevents flow from inside the packer body element located above the packer element into the production annulus as part of the completion string.

A production packer is designed to grip and seal against the casing. Gripping is accomplished with metal wedges. These components usually have sharpened, carburized teeth that dig into the metal of the casing. Sealing is accomplished with large, cylindrical rubber elements. In situations where the sealed pressure is very high, metal rings are used on either side of the elements to prevent the rubber from extruding.

A packer is run in the casing on production tubing or set on a drill pipe or on an electric wireline using an explosive charge in the setting tool. Once the desired depth is reached, metal wedges and a sealing element must be expanded out to contact the casing. Forces are applied by the packer-running tool to push metal wedges up a ramp and to compress the element, causing it to expand outward. The forces are applied either hydraulically, mechanically, or with a slow burning chemical-explosive charge.

To remove a packer from the casing, a high tensile force may be applied to the production tubing, to which the packer is connected. Before a net force can be applied to the packer, the weight of the entire production tubing must be overcome. A low weight thus results in a higher net tensile force on the packer. Further, if a high tensile force must be applied to the tubing, to overcome its weight, these forces will lead to a slight decrease of total diameter. In other words, the tube is slightly elongated. As a result, the collapse rating, i.e. the ability to withstand external forces to the tubing, is decreased. Lighter tubing thus leads to a lower total required tensile force for a certain total net downhole pulling force on the production packer. As a result of this lower total required tensile force, the collapse rating of the tubing is not influenced as much as would be the case with heavier tubing.

By providing a tubing having an inner liner and an outer wall as a production and/or injection tubing, potential cracks in the outer wall are mitigated by the inner liner. When the tubing is exposed to very high wall stresses, micro cracks may form in the outer wall. The liner will ensure that those cracks do not result in leakage. These very high stresses can be caused by internal pressure or tensile load on the tubing. Prevention of these micro cracks ensures a much longer life expectancy and a much higher ability to withstand external stresses. This also ensures that the tubing can be spooled, without negatively influencing its structural integrity. The characteristics of the tubing according to the present disclosure ensures that the tubing survives the life of a well (i.e. 20-30 years). As a result, the well operator is not faced with an investment choice when the well is down to relatively low capacity. As such, the risk of permanent loss of oil production is reduced.

An embodiment of this invention relates to substantially vertical tubing. This means that the tubing may travel in a deviated section, horizontally for small sections, relative to the vertical length of the tubing, but should mainly be directed vertically. In embodiments, the tubing may have more total horizontal reach than vertical depth. The tubing may travel vertically for a long distance, such as more than 100 meters, preferably more than 200 meters, more preferably more than 400 meters.

In an embodiment, the inner liner may comprise an isotropic material. The term isotropic material is understood to entail that the material has mechanical properties in all directions, which do not substantially vary. This is beneficial to the working principle of the tubing since the ductility will be equal in all directions. As a result, the liner is able to ensure the integrity of the tubing, regardless of the specific load that acts on it. As a result, the tubing can be spooled, bent, and otherwise manipulated without having to take the deformation orientation into account.

In an embodiment, the inner liner has a rupture strain rate of more than about 0,5%, preferably of more than about 5%, more preferably of more than about 20%. The rupture strain rate is measured at 20 degrees Celsius. Having an inner liner with a rupture strain rate of the above values ensures that the outer wall of the tubing can withstand very high stresses. The allowable stresses are far beyond the stress level at which micro cracks are formed in the outer wall without causing the tubing to start leaking through those cracks. Depending on the liner material, the strain rate can be in the elastic as well as in the plastic deformation range.

In an embodiment, the inner liner may comprise metal and/or metal alloys. By providing the inner liner with metal and/or metal alloys, the structural characteristics of the tubing are improved which provides a reduction of the disadvantageous effects of microcracks while providing sufficient flexibility to ensure e.g. spooling of the tubing. The inner liner thus provides a barrier to permeation, and thus to leakage as a result of microcracks. A particular advantage of the use of metal for the inner liner is the prevention of explosive decompression. Explosive decompression results in the creation of blisters due to the rapid expansion of permeated molecules into the liner, under the effect of a sudden pressure drop. Since metals are impermeable to these molecules, the effects of explosive decompression are mitigated.

Further, the metal inner liner can be rolled, rather than extruded. Rolling is preferable to extrusion since the roundness of the product is increased in a rolling process. Further, rolling is cheaper, but cannot be used for thick walls. Since the inner liner only requires a low wall thickness, rolling may be utilized. The use of a thin metal liner in a continuous process thus facilitates the use of rolling rather than extruding.

Rolling is also more accurate, leading to an increased collapse rating. Collapse is dependent on the stiffness, the wall-thickness and the roundness of the material. The collapse-rating is thus increased due to an increased production accuracy.

More particularly, in embodiments, the inner liner may comprise one or more of non-sour service carbon steel, sour service carbon steel, martensitic stainless steel, martensitic ferritic stainless steel, duplex stainless steel, nickel alloys, nickel chrome, nickel copper alloys, titanium, and titanium alloys. These metals are particularly advantageous for use as the inner liner since they exhibit the required ductility, elasticity, and density properties. According to an embodiment of the present invention, the required thickness of the inner liner is low. As a result, very little material usage is required, leading to reduced costs, while maintaining the benefits of the use of these materials. In an embodiment, the inner liner may have a wall thickness of between about 0.5 and 4 millimeters. If the inner liner comprises a metal, the inner liner may have a wall thickness of between about 0.5 millimeters and 2 millimeters, preferably of between 0.8 and 1.5 millimeters.

In embodiments, the inner liner may comprise any nickel or chrome alloy containing other noble elements to increase corrosion resistance. In an embodiment, the inner liner may comprise any nickel-based alloy. In an embodiment, the inner liner may comprise various grades of titanium. The inner liner may also comprise silver and/or silver alloys. The inner liner may also comprise alloys having any volume of gold, palladium, platinum, rhodium, and/or niobium. In an embodiment, the inner liner may comprise one or more of carbon steel, chrome 13, chrome 22, chrome 25, nickel alloys, monel, titanium, and titanium alloys.

In an embodiment, the inner liner may comprise a polymer material, preferably wherein the inner liner comprises one or more of polyether ether ketone, polyetherketoneketone, polyvinylidene fluoride, ethylene chlorotrifluoroethylene, Polyamide 11, and polycaprolactam. If the inner liner comprises a polymer material, the inner liner may have a wall thickness of between about 2 millimeters and 4 millimeters, preferably of between 2.5 and 3.5 millimeters.

In an embodiment, the polymer material may have a glass transition temperature of at least about 120 degrees Celsius, preferably of at least about 160 degrees Celsius, more preferably of at least about 180 degrees Celsius, still more preferably of at least about 200 degrees Celsius, most preferably of at least about 220 degrees Celsius, measured by Differential Scanning Calorimetry (DSC).

The glass transition temperature is measured with Differential Scanning Calorimetry (DSC). While the glass transition temperature may also be measured using different measurement techniques, such as Dynamic Mechanical Analysis (DMA), it shall be appreciated that a measurement technique which is different from DSC will likely result in different glass transition temperatures. The glass transition temperatures described in this document should be determined with DSC. If another measurement technique is used, a conversion should be applied to ensure these values correspond to what would be found if DSC were used.

DSC is a thermo-analytical technique in which the difference in the amount of heat required to increase the temperature of a sample and reference is measured as a function of temperature. Both the sample and reference are maintained at nearly the same temperature throughout the experiment. Generally, the temperature program for a DSC analysis is designed such that the sample holder temperature increases linearly as a function of time. The reference sample should have a well-defined heat capacity over the range of temperatures to be scanned. An example standard test method for assignment of the glass transition temperatures by DSC is given in ASTM E1356-08(2014).

The provision of a polymer material having the above glass transition temperatures ensures operability of the production tubing under the high temperatures in a production well. These glass transition temperatures ensure that the inner liner does not become too viscous to achieve its desired function of protecting the tubing from microcracks in the outer wall. Also it ensures that the inner liner will maintain its structural integrity when the tubing is exposed to temperatures approaching the glass transition temperature values.

In an embodiment, the tubing may have a density that of lower than about 3000 kg/m³ at 25 degrees Celsius, preferably lower than about 2000 kg/m³ at 25 degrees Celsius, more preferably lower than about 1500 kg/m³ at 25 degrees Celsius, still more preferably lower than about 1200 kg/m³ at 25 degrees Celsius. The provision of a tubing having a relatively low density ensures that the weight of the tubing, in relation to the medium it is provided in, is low. For example, having a tubing with a weight per meter, i.e. the weight of one meter of tubing, which is equal to, or smaller than, the weight of completion or workover fluid/brine in or around the same meter of tubing, ensures that the tubing has a low, or negative, relative weight, thereby increasing ease of handling the tubing. This further reduces the high net forces that need to be applied to the tubing hanger.

In an embodiment, the outer wall may comprise a fiber-reinforced material. The provision of a tubing having an outer wall with fiber-reinforced material ensures a light weight of the tubing. This ensures that a high net downhole pulling force can be exerted by the tubing, on the production packer. The net downhole pulling force is primarily limited by the weight of the tubing, which must first be overcome to result in a net pulling force. A low weight therefore results in a higher net downhole pulling force under a constant total pulling force. This ensures a larger force can be applied to the packer, if so required. Alternatively, this ensures that a lighter and less expensive pulling system can be utilized to deliver the required forces. Even if a high force can be applied at the surface, the tensile/yield strength of the tubing is often a limitation to the net pulling force on the production packer. By virtue of the features of the present disclosure, a high net downhole pulling force may be applied to the production packer, without exceeding the maximum tensile/yield strength of the tubing.

The outer wall may comprise fibers set within a thermoset polymer matrix. By providing the fibers within a thermoset polymer matrix, the material can be provided with good structural integrity, even upon the application of increased temperatures.

In an embodiment, the thermoset polymer matrix material may have a glass transition temperature of at least about 120 degrees Celsius, preferably of at least about 160 degrees Celsius, more preferably of at least about 180 degrees Celsius, still more preferably of at least about 200 degrees Celsius, most preferably of at least about 220 degrees Celsius. As mentioned, the glass transition temperature is measured with Differential Scanning Calorimetry (DSC).

In an embodiment, the fibers of the fiber-reinforced material may comprise one or more of carbon fiber, glass fiber, aramid fiber, and/or basalt fiber. In an embodiment, the fibers of the fiber-reinforced material may comprise pitch based carbon fiber and/or pan based carbon fiber.

In an embodiment, the fiber-reinforced material may have an ultimate tensile strength of at least about 2500 MPa, preferably of at least about 5000 MPa, more preferably of at least about 7000 MPa. In an embodiment, the ultimate tensile strength is lower than 8000 MPa. In an embodiment, the fiber-reinforced material may have an ultimate tensile strength of between 2500 and 8000 MPa, preferably of between 5000 and 8000 MPa, more preferably of between 7000 and 8000 MPa.

In an embodiment, the fiber-reinforced material may have a modulus of elasticity of between 60 and 590 GPa, preferably of between 200 and 400 GPa, more preferably of between 200 and 250 GPa. The ultimate tensile strength and the modulus of elasticity denoted above are values of dry fibers. In measuring these characteristics, the fibers are free of resin.

In an embodiment, the fiber-reinforced material may comprise PX35 and/or T700 carbon fiber.

In an embodiment, the thermoset polymer matrix, into which the fibers are set, may comprise at least an epoxy resin.

In an embodiment, the thermoset polymer matrix may comprise one or more of polyester, epoxy, dicyclopentadiene, polyurethane, phenolic polymers, bismaleimide resin, bisphenol A diglycidyl ether and/or phthalonitrile. In still further embodiments additives of nano silica and/or core shell rubber may be used.

In an embodiment, the tubing may have an uninterrupted length of greater than 15 meters, preferably of greater than 30 meters, more preferably of greater than 50 meters, still more preferably of greater than 100 meters. The provision of a long tubing, according to the above embodiment, ensures that the tubing requires less coupling members to achieve the desired depth. Since the tubing comprises an inner liner and an outer wall, it can be supplied to a spool (e.g. for transportation purposes), thereby allowing for easier transportation and application of the tubing. Conventional production tubing cannot be provided on a spool and can therefore not have a length greater than about 9-12 meters. The tubing of the present invention can be much longer, since it can be continuously spooled on a spool for transportation and/or well application. The tubing of the present invention may have a length of greater than 200 meters, 500 meters, 1000 meters, 2000 meters, or even greater than 3000 meters. A tubing that is longer than 15 meters but consists of multiple sections connected together into a single longer length is not considered to be uninterrupted.

In an embodiment, the tubing may have an outer diameter of less than about 200 millimeters, preferably of less than about 160 millimeters, more preferably of less than about 140 millimeters. In embodiments, the outer diameter may also be of less than about 90 millimeters, preferably of less than about 74 millimeters, more preferably of less than about 62 millimeters. The outer diameter is defined as the maximum outer diameter of the outer wall of the tubing. This is determinative of the required size of the casing, in which the tubing is provided. A smaller outer diameter allows for the application of the tubing in a smaller well, having a narrower casing. In addition, the tubing preferably complies with standard sizes, defined by the API 5CT industry standard. Since all well operation equipment is designed around these dimensions, not adhering to these standard dimensions results in the need of equipment of specific sizes for e.g. workover/intervention purposes. Further, the tubing preferably complies with the standard sizes of the Blow Out Preventer (BOP). The BOP is a specialized valve or similar mechanical device, used to seal, control and monitor oil and gas wells to prevent blowouts, the uncontrolled release of crude oil or natural gas from a well. They are usually installed in stacks of other valves. Deviating from these sizes may provide large problems for well operators since it may require other components, such as the BOP, to be changed in accordance with the tubing. In particular, the tubing connection upset and the coupling outer diameter preferably complies with the sizes of the BOP. The tubing connection upset is the thickened part of the outer wall, close to the coupling member. This entails loss of production time, high installation and development time, and as such, high costs.

In an embodiment, the tubing may have an inner diameter of more than about 110 millimeters, preferably of more than about 130 millimeters, more preferably of more than about 150 millimeters. In embodiments, the inner diameter may also be of more than about 20 millimeters, preferably of more than about 45 millimeters, more preferably of more than about 80 millimeters, still more preferably of more than about 125 millimeters. The inner diameter is defined as the minimum inner diameter of the inner liner of the tubing. This is determinative of the cross-sectional area through which the fluid, e.g. oil and/or gas, can flow. A larger inner diameter allows for a higher flow rate. The inner diameter is also relevant to tooling that must pass through the tubing. Standard tools may not fit in tubing with an inner diameter which is too small and a special line of dedicated tools for this diameter has to be designed and manufactured, increasing cost and time of the intervention. Thus, if the inner diameter is either too small or too big, the difficulty (costs and time) of well intervention procedures is increased.

In an embodiment, the tubing may have a wall thickness of less than about 60 millimeters, preferably of less than about 40 millimeters, more preferably of less than about 30 millimeters, still more preferably less than about 20 millimeters, and most preferably of less than about 10 millimeters.

The requirements API 5CT of production tubing and casing sets out certain maximum outer diameters with corresponding minimum inner diameters, thereby providing requirements for the maximum wall thickness of the tubing. An advantage of a smaller wall thickness of the tubing is an increased maximum flow rate with a given outer diameter. As such, the size of the well, constricted by the inner diameter of the casing, is best utilized with a tubing having a low wall thickness. Conformity to the requirements of API 5CT standards is highly important in the industry, since deviations will force well-operators to determine admissibility on a case-by-case basis, entailing much more procedural spend on time and money for e.g. the development of intervention tools with deviating sizes.

In an embodiment, the tubing may comprise a terminal coupling member, wherein the outer wall comprises a fiber-reinforced material, comprising fibers, and wherein the fibers of the fiber-reinforced material bind to the coupling member, thereby joining the coupling member to the tubing. Any of the embodiments of the coupling member described hereinafter may be utilized in the above embodiments as well.

In an embodiment, the tubing may comprise a tubing opening, wherein the tubing opening is coupled to an assembly of valves, and/or spools, and/or fittings, such as a Christmas tree. In petroleum and natural gas extraction, a Christmas tree, or "tree", is an assembly of valves, spools, and fittings used to regulate the flow of pipes in an oil well, gas well, water injection well, water disposal well, gas injection well, condensate well and other types of wells. This device is located at the surface of the well. Opening, in respect to this embodiment, thus refers to the opening of the tubing at the surface of the well.

In aspect, not covered by the appended claims, there is provided tubing for transporting a fluid at a production and/or injection well, wherein the tubing comprises an outer wall comprising fibers and an inner liner, wherein the tubing comprises a terminal coupling member, and wherein the fibers extend over the coupling member, thereby joining said tubing to said coupling member. In an embodiment, the outer wall of the tubing comprises a fiber-reinforced material, which comprises fibers, said fibers extending over the coupling member.

By extending the fibers over the coupling member, an integral connection is formed between the tubing and the coupling member, thereby ensuring a connection between the coupling member and the tubing which has the required structural characteristics (such as tensile strength) without damaging the tubing. The connection between the coupling member and the fibers of the outer wall of the tubing ensures that the coupling integrity relies much less on the strength of the resin. This is achieved by providing a mechanical interlock between the fibers and the coupling member.

In an embodiment, the coupling member may be a tubular member. The coupling member may comprise a threaded end, on a distal portion, facing away from the tubing. The connection between the coupling member and the tubing thus may facilitate a threaded end. Other known coupling mechanisms may be disposed on the distal end of the coupling member. In an embodiment, the coupling member may have a hollow shape. This ensures that a fluid may pass through the coupling member. In an embodiment, the coupling member is sized in accordance with the sizing of the tubing. The outer diameter of the coupling member may thus be in line with the outer diameter of the tubing. In an embodiment, the inner diameter of the coupling member may be in line with the inner diameter of the tubing. Small deviations in the diameters of the coupling member and the tubing may exist and/or be desirable for construction purposes.

In an embodiment, radially outwardly extending projections may be provided on the coupling member, wherein the fibers are disposed between the projections. The provision of radially extending projections on the coupling member ensures that the fibers of the outer wall of the tubing can be guided over the coupling member, between the projections, to ensure a gradual change of direction of the tensile forces on the fibers so that the fibers can wind around the coupling member without a sudden change of direction. As a result, the tensile strength of the fibers is not negatively influenced while still achieving a strong interlocking connection between the tubing and the coupling member.

In an embodiment, the radially extending projections are conical or rounded. The projections being conical or rounded ensures that the fibers can be easily disposed between the projections, without the fibers catching on sharp edges of the projections.

In an embodiment, the projections may comprise a cylindrical stem. A cylindrical stem ensures an easier automated production process of the projections. For the production process of the coupling member, with the projections disposed thereon, it is preferable to have a cylindrical stem since that provides a surface area having a constant thickness, along its length-direction, contrary to a purely conical projection. The provision of a cylindrical portion ensures that the projections can be readily held before they are connected to the coupling member. In an embodiment, the cylindrical stem ends with a rounded or conical section.

In an embodiment, one or more projections may be provided with a flange, said flange being connected to a base portion of the projections. Having a flange connected to the projections ensures that the process of welding the projections to the coupling member when the coupling member is produced is easier. In alternative embodiments, the projections may be integrally formed with the coupling member, or protrude through openings in the coupling member. In still further embodiments, the projections may be provided with additional components and/or structures integrally formed therewith, to keep the fibrous material positioned between the projections. Such components and/or structures may be barbs, hooks, ridges, clasps, or the like.

In an embodiment, the projections have a maximum diameter of between 1 mm and 15 mm, preferably between 2 mm and 10 mm, more preferably between 3 mm and 8 mm, most preferably between 4 and 6 mm.

In an embodiment, the projections are distributed over the coupling member, in the form of a regular pattern and/or with a density gradient and/or with a constant density. This ensures that during the winding of the outer wall of the tubing, the orientation of the coupling member is of no relevance to the production process.

In an embodiment, the ratio of the distance between two projections to the diameter of the projections may be greater than 1, preferably greater than 3. In an embodiment, the density of the projections may be at most 1 projection per square centimeter, preferably per 2 square centimeter, more preferably per 5 square centimeter. This ensures that the welding tool to attach the projections to the coupling member is able to reach in between the projections.

In an embodiment, the inner liner may comprise an isotropic material. In an embodiment, the inner liner may have a rupture strain rate of more than about 0.5%, preferably of more than about 5%, more preferably of more than about 20%.

In an embodiment, the inner liner may comprise metal and/or metal alloys. In an embodiment, the inner liner may comprise one or more of steel, nickel alloys, nickel chrome, nickel copper alloys, titanium, titanium alloys, preferably wherein said steel is selected from the group consisting of non-sour service carbon steel, sour service carbon steel, martensitic stainless steel, martensitic ferritic stainless steel, and duplex stainless.

In an embodiment, the inner liner may be welded to the coupling member. The possibility to weld the inner liner to the coupling member avoids other sealing solutions that would be required when using a polymer liner and a metal fitting. Seals have a shorter service life than a weld.

If the inner liner is of a different material than the coupling member, welding the two materials together may be difficult. To overcome this difficulty, the tubing may be provided with a bi-metal ring, disposed between the inner liner and the coupling member. The bi-metal ring is a cylindrical member having one material on one end and another material on the other end. This bi-metal ring ensures a welded connection between the metal of the inner liner and the metal of the coupling member. If the coupling member is e.g. Inconel, a first end of the bi-metal ring is also Inconel. If the inner liner is made of e.g. titanium, a second end of the bi-metal ring is also titanium. The Inconel coupling member may be welded to the Inconel first end and the titanium inner liner may be welded to the titanium second end of the bi-metal ring.

The formation of such a bi-metal ring may be performed by explosion welding or friction stir welding. Other manufacturing techniques may also be used to create the bi-metal ring.

In an aspect, not covered by the appended claims, there is provided tubing for use as a velocity string in a gas well, the tubing comprising: a first open end; a second open end; a sheath comprising titanium extending between the first open end and the second open end; and a bi-metal ring having a first end and a second end, wherein the first end of the bi-metal ring comprises titanium and is welded to the first open end of the sheath, wherein the second end of the bi-metal ring comprises a metal and is welded to a velocity string component, such as a production packer, a downhole anchor, or a hanger. A velocity string is a small-diameter tubing string run inside the production tubing of a well as a remedial treatment to resolve liquid-loading problems. As the reservoir pressure in a gas well depletes, there may be insufficient velocity to transport all liquids from the wellbore. In time these liquids accumulate and impair production. Installing a velocity string reduces the flow area and increases the flow velocity to enable liquids to be carried from the wellbore. Velocity strings are commonly run using coiled tubing as a velocity string conduit.

The tubing comprises titanium, making it less prone to corrosion, and thereby providing a durable solution to hostile environments. The accumulated liquids described above are particularly hostile and lead to corrosion-related workovers, leading to higher costs and more associated risks.

One problem that may be foreseen with the use of a titanium sheath for a velocity string is related to the transition between the titanium sheath and the velocity string component, such as a production packer, a downhole anchor, or a hanger. The top of the titanium sheath, e.g. the side of the sheath positioned at the surface of the well, is often attached to a hanger, or the like. The lower part of the sheath, positioned close to the bottom of the well is often attached to a downhole anchor, a production packer, or the like. These velocity string components are often made from material other than titanium, such as steel, leading to an dual-metal interface between the velocity string component and the titanium sheath. A problem associated with dual-metal interfaces is galvanic corrosion.

Galvanic corrosion (also called bimetallic corrosion or dissimilar metal corrosion) is an electrochemical process in which one metal corrodes preferentially when it is in electrical contact with another, in the presence of an electrolyte. In the case of gas wells, condensate fluid present in the well acts as the electrolyte, which could lead to corrosion.

The weld of a dual-metal interface is particularly prone to galvanic corrosion. It is well-established that welding two materials together is often difficult. The resulting weld is often a weak point of the joined components. The provision of a bi-metal ring provides better protection against galvanic corrosion since the inter-material weld is omitted.

In an embodiment, the bi-metal ring is an explosion welded bi-metal ring or the bi-metal ring is a stir-welded ring. By producing the bi-metal ring with explosion welding or stir welding, the amount of material-combinations is increased. The dual-metal interface, produced with these techniques, has a much higher durability. The welds between the bi-metal ring and the sheath on the one side and the velocity string component on the other side, are still required. However, due to the provision of the bi-metal ring, the welds are between the same material. For example, a titanium sheath is welded to a titanium first end of the bi-metal ring and a steel production packer is welded to a steel second end of the bi-metal ring. The effects of galvanic corrosion to the interface between materials is hereby reduced.

In an embodiment, the tubing further comprises a second bi-metal ring, having a first end and a second end, wherein the first end of the second bi-metal ring comprises titanium and is welded to the second open end of the sheath, wherein the second end of the second bi-metal ring comprises a metal and is welded to a hanger, and wherein the second end of the first bi-metal ring is welded to a production packer, or a downhole anchor.

It shall be appreciated that any of the features of other aspects of the invention can be applied to other aspects as well.

In an aspect of the present disclosure, there is provided a production or injection installation comprising a subsurface well and a tubing according to any one embodiments described hereinbefore, said tubing being located in the subsurface well. In a preferred embodiment, the tubing is permanently installed in the well, since there is little to no need to replace the tubing. Also, the tubing is intended for production/injection purposes, and not for temporary workover/intervention purposes.

In an aspect of the present disclosure, there is provided a method of placing production and/or injection tubing in a subsurface well, the method comprising the steps of: providing tubing according to any one of the embodiments described hereinbefore on a spool having a diameter of less than 20 meters, preferably less than 15 meters; and unspooling and inserting the tubing into the well.

In an aspect of the present disclosure, there is provided a method of manufacturing tubing, the method comprising the steps of: providing an inner liner; winding a fiber-reinforced material around the inner liner; providing a thermosetting polymer material to the fibrous material; curing the thermosetting polymer material, preferably by heating the thermosetting polymer.

In an embodiment, the inner liner may comprise a metal, wherein preferably the inner liner is welded to a coupling member. In an embodiment, the thermosetting polymer may be heated via induction heating. Induction heating is advantageous since it leads to a significant increase in production speed.

In an embodiment, an electrically conducting additive may be provided in the thermosetting polymer. This enables induction heating, even if the fiber-reinforced material does not provide the required electrical conductivity.

In an embodiment, the inner liner may be manufactured with pre-preg tapes. Pre-preg tape is a fibrous material that is impregnated with a polymer resin without curing the resin. This tape is used as a raw material and can be shaped (e.g. wound) to form tubing. After the shape has been established, the polymer resin is cured to its final state by applying additional heat. In a similar variant, these tapes are sometimes called tow-preg. Tow-preg is a lower cost but very similar alternative to pre-preg tapes.

In an aspect of the present disclosure, there is provided a method of producing mineral oil or natural gas from a subsurface reservoir, comprising the steps of providing tubing according to any one of the embodiment described hereinbefore in a subsurface reservoir; and extracting subsurface oil or gas through the tubing to provide said mineral oil or natural gas.

In an aspect of the present disclosure, there is provided a system comprising the tubing according to any of the embodiments described hereinbefore and connected to a production packer and/or a downhole anchor. The connection may be direct or indirect. The system may be a production or injection system. The system may be arranged for oil and/or gas production.

### BRIEF DESCRIPTION OF THE DRAWINGS

The features and advantages of the invention will be appreciated upon reference to the following drawings, in which:
FIG. 1 is a cross-sectional view of the tubing of an embodiment of the present invention provided in the casing of the well;
FIG. 1A is a blow-out view of one side of the tubing according to an embodiment of the present invention;
FIG. 1B is a cross-sectional view taken at B-B of FIG. 1, of an embodiment of the present invention provided in the casing of the well;
FIG. 2 is a cross-sectional view of the tubing of an embodiment of the present invention provided in the casing and attached to a coupling member and a production packer;
FIG. 3 is a cut-out view of a coupling member connected to the tubing according to an embodiment of the present invention;
FIG. 4 is a front view of the coupling member, connected to the inner liner according to an embodiment of the present invention;
FIG. 5 is a flow chart illustrating a method for placing production and/or injection tubing in a subsurface well;
FIG. 6 is a flow chart illustrating a method of manufacturing tubing; and
FIG. 7 is a flow chart illustrating a method of producing mineral oil or natural gas from a subsurface reservoir.

### DESCRIPTION OF ILLUSTRATIVE EMBODIMENTS

The following is a description of certain embodiments of the invention, given by way of example only and with reference to the drawings.

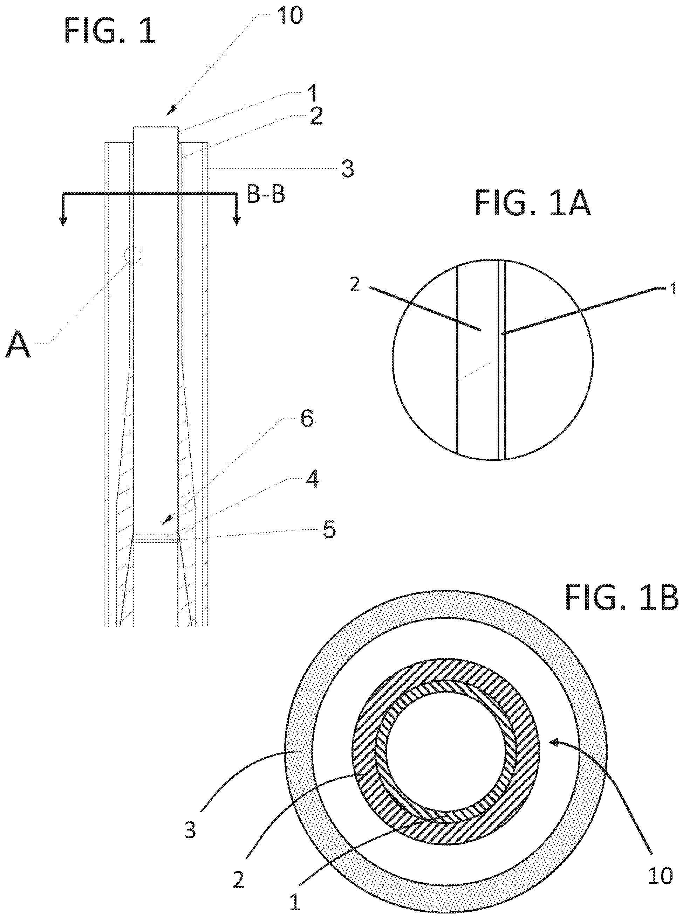

Referring to FIG. 1, a cross-sectional view of the tubing 10 of an embodiment of the present invention is shown, provided in the casing 3 of the well. The tubing 10 comprises an inner liner 1 and an outer wall 2. In the shown embodiment, the outer wall 2 of the tubing 10 expands as it extends downwardly towards the coupling member 7. The coupling member 7 receives the material of the outer wall 2 to bind the outer wall 2 of the tubing 10 to the coupling member 7. The dimensions of the tubing 10, including the inner liner 1 and the outer wall 2, are choses so that a coupling member 7 can be attached to the tubing, without having the tubing 10 reach a size that can no longer fit in the casing 3 of the well.

Referring to FIG. 1A, a blow-out view of one side of the tubing according to an embodiment of the present invention is shown. In the shown embodiment, the outer wall 2 is shown to have a higher thickness than the inner liner 1 of the tubing 10. The outer wall 2 provides a high degree of structural integrity to the tubing 10, while the inner liner 1 preferably comprises an isotropic impermeable material which mitigates the effects of potential microcracks in the surface of the outer wall 2 of the tubing 10.

Referring to FIG. 1B, a cross-sectional view taken at B-B of FIG. 1, of an embodiment of the present invention provided in the casing of the well is shown. The cross-sectional view shows the tubing 10, comprising of an inner liner 1 and an outer wall 2. The tubing 10 is provided in the casing 3 of the well.

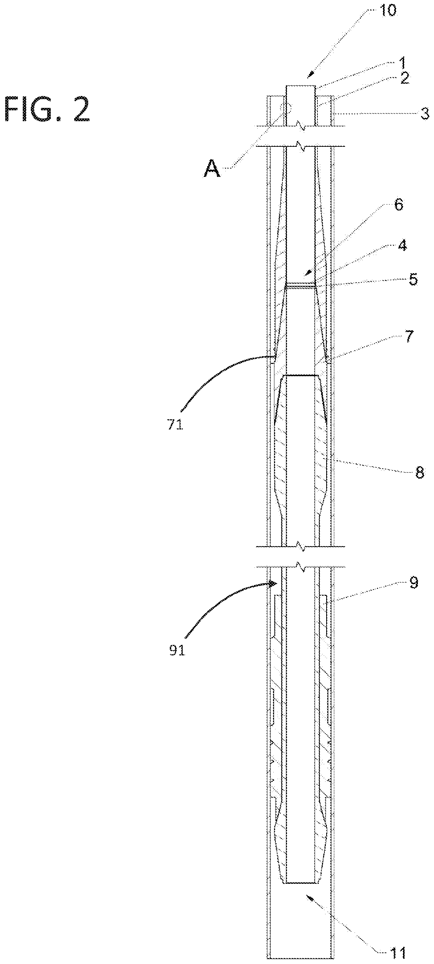

Referring to FIG. 2, a cross-sectional view of the tubing 10 of an embodiment of the present invention is shown, provided in the casing 3 and attached to a coupling member 7 and a production packer 9. The tubing 10 is attached to the coupling member 7 through binding the fibers of the outer wall 2 to the coupling member 7. As can be seen in the figure, the thickened section of the outer wall 2 at the interface region between the tubing 10 and the coupling member 7, runs over the coupling member. The fibers of the outer wall 2 extend between the projections 71 of the coupling member 7, thereby creating an integral connection between the outer wall 2 and the coupling member 7.

In addition, in the shown embodiment, there is provided a bi-metal ring 6, which is provided between the coupling member 7 and the inner lining 1 of the tubing 10. In particular, this bi-metal ring 6 comprises a first end 4 which comprises a metal corresponding to the material of the inner liner 1. This first end 4 of the bi-metal ring 6 is connected to the inner liner 1 of the tubing 10, preferably via welding. The bi-metal ring 6 further comprises a second end 5, which comprises a metal corresponding to the material of the coupling member 7. This second end 5 of the bi-metal ring 6 is connected to the coupling member 7, also preferably via welding. In this manner, the inner liner 1 and the coupling member 7 may be connected to one another via welding, regardless of the fact that they can be made of different materials. As eluded to in the above section, regular welding techniques may not be sufficient to connect two components of different metals. The bi-metal ring 6 is manufactured via e.g. explosion welding or friction stir welding.

To the coupling member 7, a pub joint 8 may be connected. Pub joints are known standard components in oil and gas industry, designed to provide the final component to a completion string. The pub joint 8 may be connected to the coupling member 7 with any known coupling mechanisms. In the shown embodiment, the pub joint 8 is connected to the coupling member 7 with a threaded connection. To the pub joint 8, a production packer 9 is connected. The production packer 9 provides a seal between the formation 11, e.g. the zone from which a fluid is produced, and the production annulus 91, the region between the tubing and the casing, above the production packer 9. The production packer 9 thus provides a seal between the pub joint 8 and the casing 3, to separate the production annulus 91 and the formation 11.

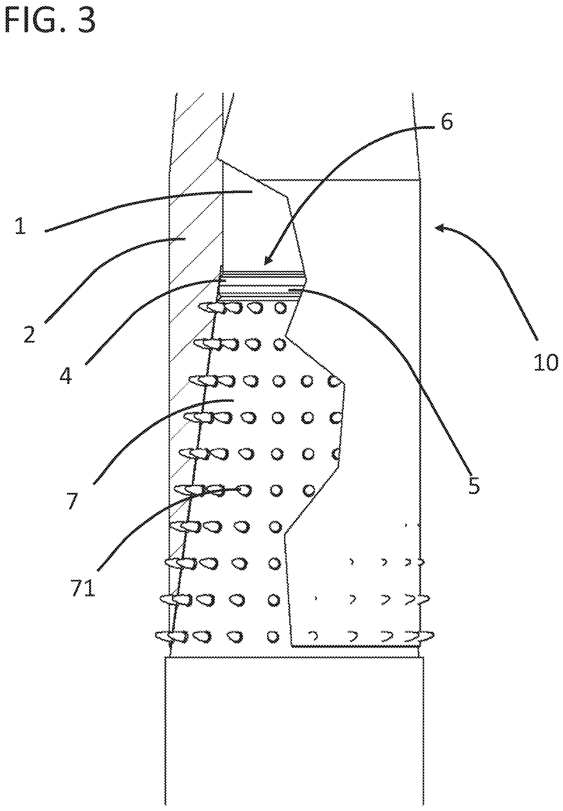

Referring to FIG. 3 a cut-out view of a coupling member 7 connected to the tubing 10 according to an embodiment of the present invention is shown. The figure shows the tubing 10 comprising an inner liner 1 and an outer wall 2, connected to a coupling member 7. As discussed, in this embodiment, the inner liner 1 is connected to the first end 4 of the bi-metal ring 6, preferably by welding. On the other side, the second end 5 of the bi-metal ring 6 is connected to the coupling member 7. As can be seen, the coupling member 7 comprises a plurality of projections 71, which extend radially outward, and are provided across the coupling member 7. These projections 71 are arranged to receive the fibers of the outer wall 2 of the tubing 10. These fibers extend between the projections 71 of the coupling member 7, thereby creating an integral connection between the tubing 10 and the coupling member 7.

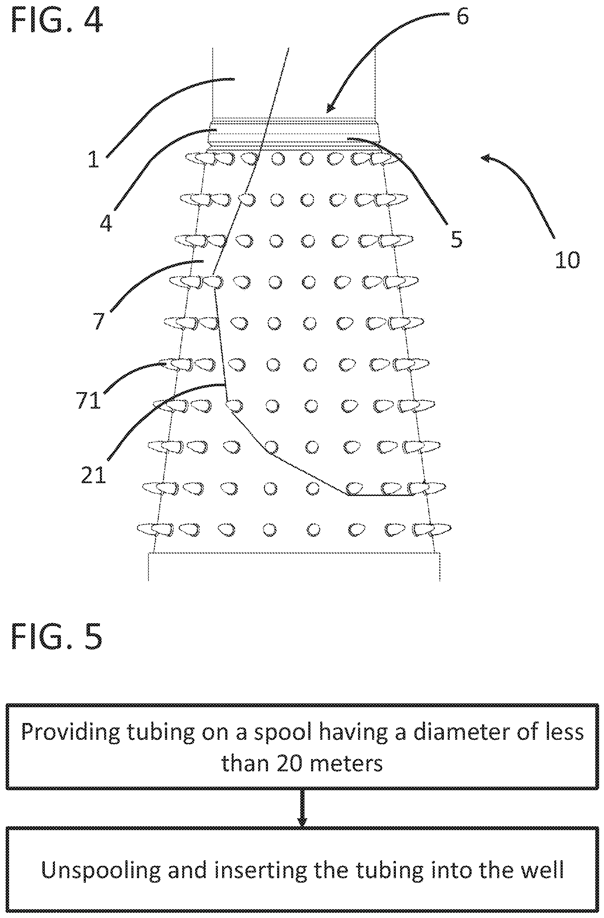

Referring to FIG. 4, a front view of the coupling member 7, connected to the inner liner 1 of the tubing 10, according to an embodiment of the present invention is shown. The inner liner 1 is connected to the coupling member 7 via a bi-metal ring 6, comprised of a first end 4 and a second end 5, composed of the materials corresponding to the materials of the inner liner 1 and the coupling member 7, respectively. On the coupling member 7, a number of projections 71 are disposed, between which the fibers 21 of the outer wall 2 may be guided. As shown in the figure, one such fiber 21 is directed over the inner liner 1 of the tubing 10 between the projections 71. The projections 71 allow for a gradual directional change of the fiber 21 to ensure the fiber does not encounter disadvantageous amounts of local stress.

Different layers of fibers 21 may be wound around the inner liner 1 of the tubing 10 at different winding angles relative to a central tubing axis. The low angle fibers 21 are mainly responsible for carrying the axial loads and providing the connection to the coupling member 7. Therefore, particular attention must be given to the winding pattern of the low angle fibers 21 when transitioning to the coupling member 7 and to the path they follow between the projections 71. To provide a smooth and distributed transfer of axial loads from the fibers 21 to the coupling member 7, a gradual change of fiber direction is desired. This translates into so called wide turns, e.g. turns with a large radius. This is shown e.g. in FIG. 4. An even distribution of loads onto the projections 71 is also achieved by ensuring that the turns of each new low angle fiber 21 is placed at a different location along the coupling member 7 than the previous one. The high angle fibers, provided in the outer wall 2 are mainly responsible for carrying the circumferential loads i.e. pressure and collapse loads. When transitioning onto the coupling member 7, these high angle fibers maintain their path and angle. This method will sandwich the low angle fibers 21 into a stable laminate, thereby increasing the integrity and stability of the low angle fibers 21.

The transition of fibers from the inner liner 1 onto the coupling member 7 may be a weak point of the tubing 10. To design a fiber transition that is as strong or stronger than the tubing itself, additional local fibers 21 may be added. This leads to the creation of the tubing connection upset, e.g. the increased thickness of the outer wall 2, closer to the coupling member 7. The maximum outer diameter of the pipe body as well as the maximum outer diameter of the coupling member 7 may be determined by industry standards, such as the maximum inner diameter of the BOP, and/or the casing. Additional local fibers may be added to increase the strength at the transition point while not exceeding the maximum connection upset diameter.

Referring to FIG.5, a flow chart illustrating a method for placing production and/or injection tubing in a subsurface well is shown. It shows the steps of providing tubing 10 according to any of the abovementioned embodiments on a spool having a diameter of less than 20 meters. In a preferred embodiment, the spool has a diameter of less than 15 meters. The figure further shows the step of unspooling and inserting the tubing 10 into the well. Since the tubing 10 may be in accordance with the industry standard requirements, the tubing 10 will readily fit inside the casing 3 of the well, thereby greatly improving operational efficiency.

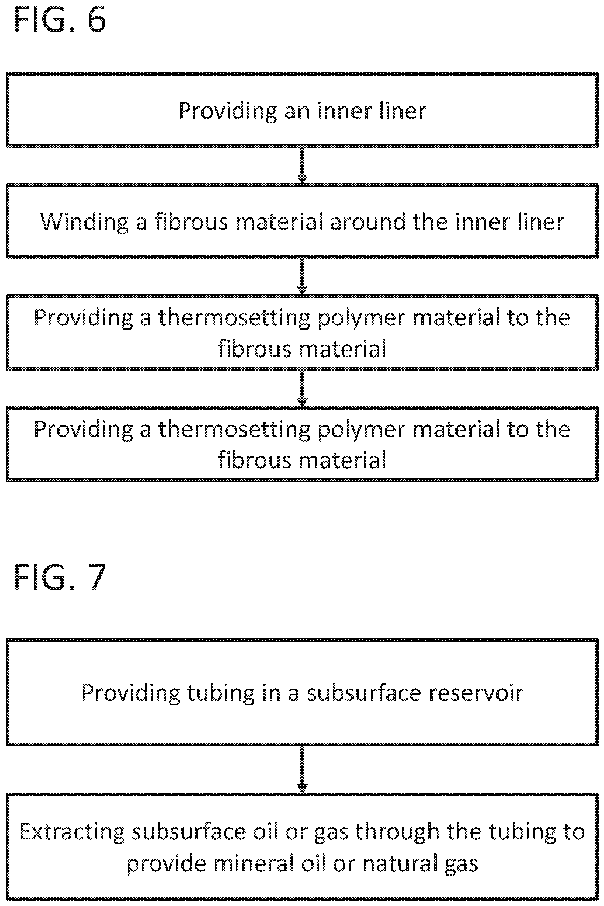

Referring to FIG. 6, a flow chart illustrating a method of manufacturing tubing 10 is shown. The figure shows the steps of providing an inner liner 1 according to any of the abovementioned embodiments. A fibrous material is then wound around the inner liner 2. To this fibrous material, a thermosetting polymer material is provided. Further, the thermosetting polymer material is cured, thereby forming the outer wall 2 of the tubing 10. In a preferred embodiment, this curing is done by heating the thermosetting polymer.

Referring to FIG. 7, a flow chart illustrating a method of producing mineral oil or natural gas from a subsurface reservoir is shown. The figure shows the steps of providing tubing 10 according to any of the embodiments described hereinabove in a subsurface reservoir. The subsurface oil or gas is then extracted through the tubing 10 to provide said mineral oil or natural gas.

The invention has been described by reference to certain embodiments discussed above. It will be recognized that these embodiments are susceptible to various modifications and alternative forms well known to those of skill in the art.

Further modifications in addition to those described above may be made to the structures and techniques described herein without departing from the scope of the invention. Accordingly, although specific embodiments have been described, these are examples only and are not limiting upon the scope of the invention.

## Claims

1. A system for transporting a fluid, wherein the system comprises:
a tubing hanger;
a production packer (9) and/or a downhole anchor; and
a tubing (10) connected to the production packer (9) and/or the downhole anchor,
**characterized in that** the tubing (10) comprises:
an inner liner (1); and
an outer wall (2).

2. The system according to claim 1, wherein the inner liner comprises an isotropic material;
and/or
wherein the inner liner has a rupture strain rate of more than about 0.5%,
preferably of more than about 5%, more preferably of more than about 20%.

3. The system according to any of the preceding claims, wherein the inner liner comprises metal and/or metal alloys, preferably wherein the inner liner comprises one or more of steel, nickel alloys, nickel chrome, nickel copper alloys, titanium, titanium alloys, more preferably wherein said steel is selected from the group consisting of non-sour service carbon steel, sour service carbon steel, martensitic stainless steel, martensitic ferritic stainless steel, and duplex stainless steel.

4. The system according to any of the preceding claims, wherein the inner liner comprises a polymer material, preferably wherein the inner liner comprises one or more of polyether ether ketone, polyetherketoneketone, polyvinylidene fluoride, ethylene chlorotrifluoroethylene, Polyamide 11, and polycaprolactam.

5. The system according to claim 4, wherein the polymer material has a glass transition temperature of at least about 120 degrees Celsius, preferably of at least about 160 degrees Celsius, more preferably of at least about 180 degrees Celsius, still more preferably of at least about 200 degrees Celsius, most preferably of at least about 220 degrees Celsius, measured by differential scanning calorimetry (DSC).

6. The system according to any preceding claim, wherein the tubing has a density that of lower than about 3000 kg/m³ at 25 degrees Celsius, preferably lower than about 2000 kg/m³ at 25 degrees Celsius, more preferably lower than about 1500 kg/m³ at 25 degrees Celsius, still more preferably lower than about 1200 kg/m³ at 25 degrees Celsius.

7. The system according to any preceding claim, wherein the outer wall comprises a fiber-reinforced material.

8. The system according to claim 7, wherein the outer wall comprises fibers within a thermoset polymer matrix, preferably wherein the thermoset polymer matrix material has a glass transition temperature of at least about 120 degrees Celsius, preferably of at least about 160 degrees Celsius, more preferably of at least about 180 degrees Celsius, still more preferably of at least about 200 degrees Celsius, most preferably of at least about 220 degrees Celsius.

9. The system according to any of claims 7 to 8, wherein the fibers of the fiber-reinforced material comprise one or more of carbon fiber, glass fiber, aramid fiber, and/or basalt fiber; preferably wherein the fiber-reinforced material comprises pitch based carbon fiber and/or pan based carbon fiber.

10. The system according to any of claims 7 to 9, wherein the fiber-reinforced material has an ultimate tensile strength of between 2500 and 8000 MPa, preferably of between 5000 and 8000 MPa, more preferably of between 7000 and 8000 MPa;
and/or,
wherein the fiber-reinforced material has a modulus of elasticity of between 60 and 590 GPa, preferably of between 200 and 400 GPa, more preferably of between 200 and 250 GPa.

11. The system according to any of claims 8 to 10, wherein the thermoset polymer matrix comprises at least an epoxy resin, preferably wherein the thermoset polymer matrix comprises one or more of polyester, epoxy, dicyclopentadiene, polyurethane, phenolic polymers, bismaleimide resin, and/or phthalonitrile.

12. The system according to any of the preceding claims, wherein the tubing comprises a terminal coupling member,
wherein the outer wall comprises a fiber-reinforced material; and
wherein the fiber-reinforced material binds to the coupling member, thereby joining the coupling member to the tubing.

13. The system according to any of the preceding claims, wherein the tubing comprises a tubing opening, wherein the tubing opening is coupled to an assembly of valves, and/or spools, and/or fittings, such as a Christmas tree.

14. A production or injection installation comprising a subsurface well and system according to any one of claims 1 to 13, said system being located in the subsurface well.

15. Method for subsurface fluid production and/or injection, , wherein the method comprises the steps of:
providing a system according to any one of claims 1 to 13; and
producing and/or injecting fluid using the system.

## Patentansprüche

1. System zum Transportieren einer Flüssigkeit, wobei das System umfasst:
einen Rohraufhänger;
einen Produktionspacker (9) und/oder einen Bohrlochanker; und
ein Rohr (10), das mit dem Produktionspacker (9) und/oder dem Bohrlochanker verbunden ist,
**dadurch gekennzeichnet, dass** das Rohr (10) umfasst:
eine Innenauskleidung (1); und
eine Außenwand (2)

2. System nach Anspruch 1, wobei die Innenauskleidung ein isotropes Material umfasst;
und/oder
wobei die Innenauskleidung eine Bruchdehnungsrate von mehr als etwa 0,5 %, vorzugsweise von mehr als etwa 5 %, mehr bevorzugt von mehr als etwa 20 % aufweist.

3. System nach einem der vorstehenden Ansprüche, wobei die Innenauskleidung Metall und/oder Metalllegierungen umfasst, wobei die Innenauskleidung vorzugsweise eines oder mehrere umfasst von Stahl, Nickellegierungen, Nickel-Chrom, Nickel-Kupfer-Legierungen, Titan, Titanlegierungen, wobei der Stahl mehr bevorzugt aus der Gruppe ausgewählt ist, bestehend aus nicht-saurem Dienstkohlenstoffstahl, saurem Dienstkohlenstoffstahl, martensitischem rostfreiem Stahl, martensitischem ferritischem rostfreiem Stahl und rostfreiem Duplex-Stahl.

4. System nach einem der vorstehenden Ansprüche, wobei die Innenauskleidung ein Polymermaterial umfasst, wobei die Innenauskleidung vorzugsweise eines oder mehrere umfasst von Polyetheretherketon, Polyetherketonketon, Polyvinylidenfluorid, Ethylenchlortrifluorethylen, Polyamid 11 und Polycaprolactam.

5. System nach Anspruch 4, wobei das Polymermaterial eine Glasübergangstemperatur von mindestens etwa 120 Grad Celsius, vorzugsweise von mindestens etwa 160 Grad Celsius, mehr bevorzugt von mindestens etwa 180 Grad Celsius, noch mehr bevorzugt von mindestens etwa 200 Grad Celsius, am meisten bevorzugt von mindestens etwa 220 Grad Celsius, gemessen durch dynamische Differenzkalorimetrie (DSC), aufweist.

6. System nach einem der vorstehenden Ansprüche, wobei das Rohr eine Dichte von weniger als etwa 3000 kg/m³ bei 25 Grad Celsius, vorzugsweise weniger als etwa 2000 kg/m³ bei 25 Grad Celsius, mehr bevorzugt weniger als etwa 1500 kg/m³ bei 25 Grad Celsius, noch mehr bevorzugt weniger als etwa 1200 kg/m³ bei 25 Grad Celsius aufweist.

7. System nach einem der vorstehenden Ansprüche, wobei die Außenwand ein faserverstärktes Material umfasst.

8. System nach Anspruch 7, wobei die Außenwand Fasern innerhalb einer duroplastischen Polymermatrix umfasst, wobei das duroplastische Polymermatrixmaterial vorzugsweise eine Glasübergangstemperatur von mindestens etwa 120 Grad Celsius, vorzugsweise von mindestens etwa 160 Grad Celsius, mehr bevorzugt von mindestens etwa 180 Grad Celsius, noch mehr bevorzugt von mindestens etwa 200 Grad Celsius, am meisten bevorzugt von mindestens etwa 220 Grad Celsius aufweist.

9. System nach einem der Ansprüche 7 bis 8, wobei die Fasern des faserverstärkten Materials eines oder mehrere umfassen von Kohlenstofffasern, Glasfasern, Aramidfasern und/oder Basaltfasern; wobei das faserverstärkte Material vorzugsweise pechbasierte Kohlenstofffasern und/oder pfannenbasierte Kohlenstofffasern umfasst.

10. System nach einem der Ansprüche 7 bis 9, wobei das faserverstärkte Material eine Zugfestigkeit zwischen 2500 und 8000 MPa, vorzugsweise zwischen 5000 und 8000 MPa, mehr bevorzugt zwischen 7000 und 8000 MPa aufweist;
und/oder
wobei das faserverstärkte Material einen Elastizitätsmodul zwischen 60 und 590 GPa, vorzugsweise zwischen 200 und 400 GPa, mehr bevorzugt zwischen 200 und 250 GPa aufweist.

11. System nach einem der Ansprüche 8 bis 10, wobei die duroplastische Polymermatrix mindestens ein Epoxidharz umfasst, wobei die duroplastische Polymermatrix vorzugsweise eines oder mehrere umfasst von Polyester, Epoxid, Dicyclopentadien, Polyurethan, Phenolpolymeren, Bismaleimidharz und/oder Phthalonitril.

12. System nach einem der vorstehenden Ansprüche, wobei das Rohr ein Anschlusskopplungselement umfasst,
wobei die Außenwand ein faserverstärktes Material umfasst; und
wobei sich das faserverstärkte Material mit dem Kopplungselement verbindet, wobei dadurch das Kopplungselement mit dem Rohr vereint wird.

13. System nach einem der vorstehenden Ansprüche, wobei das Rohr eine Rohröffnung umfasst, wobei die Rohröffnung mit einer Anordnung aus Ventilen und/oder Spulen und/oder Armaturen, wie einem Eruptionskreuz, gekoppelt ist.

14. Produktions- oder Injektionsanlage, umfassend einen unterirdischen Brunnen und ein System nach einem der Ansprüche 1 bis 13, wobei sich das System in dem unterirdischen Brunnen befindet.

15. Verfahren für eine Produktion und/oder Injektion von unterirdischen Flüssigkeiten, wobei das Verfahren die Schritte umfasst:
Bereitstellen eines Systems nach einem der Ansprüche 1 bis 13; und
Produzieren und/oder Injizieren von Flüssigkeiten unter Verwendung des Systems.

## Revendications

1. Système de transport d'un fluide, dans lequel le système comprend :
une suspension de colonne de production ;
une garniture d'étanchéité production (9) et/ou un ancrage de fond de trou ; et
une colonne de production (10) reliée à la garniture d'étanchéité de production (9) et/ou à l'ancrage de fond de trou,
**caractérisé en ce que** la colonne de production (10) comprend :
un revêtement intérieur (1) ; et
une paroi extérieure (2).

2. Système selon la revendication 1, dans lequel le revêtement intérieur comprend un matériau isotrope ;
et/ou
dans lequel le revêtement intérieur a un taux de déformation de rupture supérieur à environ 0,5 %, de préférence supérieur à environ 5 %, de préférence encore supérieur à environ 20 %.

3. Système selon l'une quelconque des revendications précédentes, dans lequel le revêtement intérieur comprend du métal et/ou des alliages métalliques, de préférence dans lequel le revêtement intérieur comprend un ou plusieurs éléments parmi acier, alliages de nickel, nickel chrome, alliages de nickel cuivre, titane, alliages de titane, plus préférablement dans lequel ledit acier est choisi dans le groupe constitué d'acier au carbone non corrosif, acier au carbone corrosif, acier inoxydable martensitique, acier inoxydable ferritique martensitique, et acier inoxydable duplex.

4. Système selon l'une quelconque des revendications précédentes, dans lequel le revêtement intérieur comprend un matériau polymère, de préférence dans lequel le revêtement intérieur comprend un ou plusieurs éléments des polyéther éther cétone, polyéther cétone, fluorure de polyvinylidène, éthylène chlorotrifluoroéthylène, polyamide 11 et polycaprolactame.

5. Système selon la revendication 4, dans lequel le matériau polymère a une température de transition vitreuse d'au moins 120 degrés Celsius environ, de préférence d'au moins 160 degrés Celsius environ, de préférence d'au moins 180 degrés Celsius environ, de préférence encore d'au moins 200 degrés Celsius environ, de préférence d'au moins 220 degrés Celsius environ, mesurée par calorimétrie différentielle à balayage (DSC).

6. Système selon l'une quelconque revendication précédente, dans lequel la colonne de production a une densité inférieure à environ 3000 kg/m³ à 25 degrés Celsius, de préférence inférieure à environ 2000 kg/m³ à 25 degrés Celsius, plus préférablement inférieure à environ 1500 kg/m³ à 25 degrés Celsius, encore plus préférablement inférieure à environ 1200 kg/m³ à 25 degrés Celsius.

7. Système selon l'une quelconque revendication précédente, dans lequel la paroi extérieure comprend un matériau renforcé par des fibres.

8. Système selon la revendication 7, dans lequel la paroi extérieure comprend des fibres dans une matrice polymère thermodurcie, de préférence dans lequel le matériau de la matrice polymère thermodurcie a une température de transition vitreuse d'au moins environ 120 degrés Celsius, de préférence d'au moins environ 160 degrés Celsius, de préférence d'au moins environ 180 degrés Celsius, de préférence encore d'au moins environ 200 degrés Celsius, de préférence encore d'au moins environ 220 degrés Celsius.

9. Système selon l'une quelconque des revendications 7 à 8, dans lequel les fibres du matériau renforcé par des fibres comprennent une ou plusieurs parmi des fibres de carbone, de verre, d'aramide et/ou de basalte ; de préférence, dans lequel le matériau renforcé par des fibres comprend des fibres de carbone à base de brai et/ou des fibres de carbone à base de pan.

10. Système selon l'une quelconque des revendications 7 à 9, dans lequel le matériau renforcé par des fibres a une résistance à la traction comprise entre 2500 et 8000 MPa, de préférence entre 5000 et 8000 MPa, plus préférablement entre 7000 et 8000 MPa ;
et/ou,
dans lequel le matériau renforcé par des fibres a un module d'élasticité compris entre 60 et 590 GPa, de préférence entre 200 et 400 GPa, plus préférablement entre 200 et 250 GPa.

11. Système selon l'une quelconque des revendications 8 à 10, dans lequel la matrice polymère thermodurcissable comprend au moins une résine époxy, de préférence dans lequel la matrice polymère thermodurcissable comprend un ou plusieurs éléments parmi polyester, époxy, dicyclopentadiène, polyuréthane, polymères phénoliques, résine bismaléimide, et/ou phthalonitrile.

12. Système selon l'une quelconque des revendications précédentes, dans lequel la colonne de production comprend un élément d'accouplement terminal,
dans lequel la paroi extérieure est constituée d'un matériau renforcé par des fibres ; et
dans lequel le matériau renforcé par des fibres se lie à l'élément d'accouplement, reliant ainsi l'élément d'accouplement à la colonne de production.

13. Système selon l'une quelconque des revendications précédentes, dans lequel la colonne de production comprend une ouverture de colonne de production, dans lequel l'ouverture de colonne de production est accouplée à un ensemble de vannes, et/ou de bobines, et/ou de raccords, tel qu'un arbre de Noël.

14. Installation de production ou d'injection comprenant un puits souterrain et un système selon l'une quelconque des revendications 1 à 13, ledit système étant situé dans le puits souterrain.

15. Procédé de production et/ou d'injection de fluides souterrains, dans lequel le procédé comprend les étapes consistant à :
fournir un système selon l'une quelconque des revendications 1 à 13 ; et
produire et/ou injecter du fluide à l'aide du système.
